(19) Europäisches Patentamt / European Patent Office / Office européen des brevets

(11) **EP 3 316 686 B1**

(12) **EUROPEAN PATENT SPECIFICATION**

(45) Date of publication and mention
of the grant of the patent:
**25.03.2026 Bulletin 2026/13**

(21) Application number: **16818677.3**

(22) Date of filing: **29.06.2016**

(51) International Patent Classification (IPC):
**A01N 43/36** (2006.01)    **A01P 7/04** (2006.01)
**A01N 51/00** (2006.01)

(52) Cooperative Patent Classification (CPC):
(C-Sets available)
**A01N 43/36**                                    (Cont.)

(86) International application number:
**PCT/US2016/040081**

(87) International publication number:
**WO 2017/004193 (05.01.2017 Gazette 2017/01)**

(54) **A COMPOSITION AND METHOD OF CONTROLLING PESTS**

ZUSAMMENSETZUNG UND VERFAHREN ZUR BEKÄMPFUNG VON SCHÄDLINGEN

COMPOSITION ET PROCÉDÉ DE LUTTE CONTRE LES NUISIBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2015 US 201562186762 P**

(43) Date of publication of application:
**09.05.2018 Bulletin 2018/19**

(73) Proprietor: **Basf Agro B.V. Arnhem (NL)
6835 EA Arnhem (NL)**

(72) Inventors:
• **HICKMAN, Robert B.
Maitland, Florida 32751 (US)**
• **KLEIN, Clark D.
Pittsboro, North Carolina 27312 (US)**
• **BROWN, Kenneth
Apex, North Carolina 27502 (US)**
• **SCHUH, Joseph F.
Raleigh, North Carolina 27614 (US)**
• **JORDAN, Kyle K.
Durham, North Carolina 27713 (US)**

(74) Representative: **Meissner Bolte Partnerschaft
mbB
Patentanwälte Rechtsanwälte
Postfach 86 06 24
81633 München (DE)**

(56) References cited:
EP-A1- 0 649 845        CN-A- 102 246 803
CN-A- 103 120 157      CN-A- 103 385 253
CN-A- 104 430 474      CN-A- 104 430 474
US-A- 4 857 651

• OXBOROUGH R M ET AL: "Evaluation of indoor residual spraying with the pyrrole insecticide chlorfenapyr against pyrethroid-susceptible Anopheles arabiensis and pyrethroid-resistant Culex quinquefasciatus mosquitoes", TRANSACTIONS OF THE ROYAL SOCIETY OF TROPICAL MEDICINE AND HYGIENE, ELSEVIER, GB, vol. 104, no. 10, 1 October 2010 (2010-10-01), pages 639 - 645, XP027289502, ISSN: 0035-9203, [retrieved on 20100915]
• ROMERO, ALVARO ET AL.: "Evaluation of chlorfenapyr for control of the bed bug, Cimex lectularius L.", PEST MANAGEMENT SCIENCE, vol. 66, no. 11, 2010, pages 1243 - 1248, XP055280143, ISSN: 1526-498X
• WANG, CHANGLU ET AL.: "Evaluation of an insecticide dust band treatment method for controlling bed bugs", JOURNAL OF ECONOMIC ENTOMOLOGY, vol. 106, no. 1, 2013, pages 347 - 352, XP055506457, ISSN: 0022-0493

(52) Cooperative Patent Classification (CPC): (Cont.)

C-Sets
**A01N 43/36, A01N 51/00**

**Description**

**FIELD OF THE INVENTION**

The invention relates to a method of using synergistic mixtures comprising as active components chlorfenapyr and dinotefuran insecticides to control bed bugs or other common urban pest infestations as defined below.

**BACKGROUND OF THE INVENTION**

This invention relates to processes for controlling insect populations using insecticide compositions combining synergistic acting chlorfenapyr and dinotefuran, and a method of using the synergistic composition to control common pests selected from bed bugs, cockroaches, ants and flies.

Insect resistance to control agents remains an obstacle to effective pest control. Pyrethroids constitute the majority of commercial household insecticides. Pyrethroids are repellent insecticides that induce a toxic effect when they reach the insect's nervous system. Pyrethroids obstruct the normal function of an insect's sodium channels resulting in the loss of function of the nerve cell, shut-down of the insect nervous system and ultimately death. However, insects have evolved detoxification mechanisms that limit the ability of pyrethroids to effectively control insect(s) and/or insect populations. Such resistance has led to ever increasing doses of the same toxicant or other toxicants having the same mode of action to effect an equivalent level of control. Additionally, due to this growing resistance, new control agents are needed to manage pest populations effectively.

Chlorfenapyr (4-bromo-2-(4-chlorophenyl)-1-(ethoxymethyl)-5-(trifluoromethyl)-1H-pyrrole-3-carbonitrile) is a non-repellent insecticide used to control pests. Its mode of action involves the disruption of oxidative phosphorylation in mitochondria thereby reducing production of adenosine triphosphate (ATP). It has been found to be useful for controlling pyrethroid-resistant bed bugs, but is also known to be a slow-acting agent (Romero et al., Pest Manag Sci. 66(1):1243-1248, 2010. doi: 10.1002/ps.2002). Chlorfenapyr is also not readily subject to photo degradation and therefore has good residual efficacy.

Dinotefuran ((RS)-1-methyl-2-nitro-3-(tetrahydro-3-furylmethyl) guanidine) is a non-repellent insecticide of the neonicotinoid class used to control pests. Its mode of action involves the disruption of the insect's nervous system by inhibiting nicotinic acetylcholine receptors and has been found useful in treating pyrethroid resistant pests. Dinotefuran acts through contact and ingestion and results in death shortly after contact. Dinotefuran is a fast acting agent. However, it is more readily subject to photo degradation than chlorfenapyr.

CN 102 246 803 discloses a composition comprising dinotefuran and chlorfenapyr in a ratio of 1-30:20:1.

CN 103 120 157 discloses a composition comprising 1-30 wt.% of dinotefuran and 0.5-30 wt.% of chlorfenapyr.

CN 103 385 253 discloses a composition comprising dinotefuran and chlorfenapyr in a ratio of 1:80-80:1.

CN 104 430 474 discloses an insecticidal composition comprising chlorfenapyr and dinotefuran in a weight ratio ranging from 1:100 to 100:1.

Oxborough R. M. et al.: " Evaluation of indoor residual spraying with the pyrrole insecticide chlorfenapyr against pyrethroid-susceptible Anopheles arabiensis and pyrethroid-resistant Culex quinquefasciatus mosquitoes", Transactions of the Royal Society of Tropical Medicine and Hygiene, Vol. 104, no. 10, 1. October 2010, 639-645 teaches that chlorfenapyr is used to control pests, specifically mosquitoes, which are resistant to pyrethroid.

Accordingly, there is a need for a pest control agent that overcomes insect resistance to control agents, such as pyrethroids or pyrethroid combination products; doesn't contribute to increased insect resistance to control agents; is an effective insecticide for common pests, having both fast acting and long residual activity; and/or reduces the overall amount of insecticide needed to provide an optimal level of control.

The present invention meets all of these objectives. It combines two non-repellent insecticides that utilize different modes of action, are effective against pyrethroid resistant insects, and work together in a synergistic manner to provide pest control targeted at common pests that is both fast acting and has a strong residual effect.

**SUMMARY OF THE INVENTION**

In one embodiment, the present invention relates to a method of controlling common pests comprising (a) application of a composition comprising active compound I, wherein active compound I is chlorfenapyr, and (b) active compound II, wherein active compound II is dinotefuran, to the pests, their habitat, and/or their breeding grounds, wherein the pests to be controlled are selected from bed bugs, cockroaches, ants and flies. In a particular embodiment, the common pests are pyrethroid resistant.

In one embodiment, the composition is a liquid composition, for example SCs, CSs, ECs, or other such forms of liquid compositions. In another embodiment, the composition is in an aerosol form. In a further embodiment, the composition is in a powder or dust form, gel form and/or granular form.

In another embodiment, the composition components are applied to a surface one after the other. In one embodiment, chlorfenapyr is applied to a surface before dinotefuran. In another embodiment, dinotefuran is applied to a surface before chlorfenapyr. In a further embodiment, chlorfenapyr and dinotefuran are applied to a surface simultaneously.

In one embodiment, chlorfenapyr and dinotefuran are present in the same composition prior to application to a surface.

In one embodiment, chlorfenapyr is applied directly to an insect or directly to a surface in an amount sufficient to control common pests. In one embodiment, dinotefuran is applied directly to an insect or directly to a surface in an amount sufficient to control common pests. In yet another embodiment, chlorfenapyr and/or dinotefuran are present in a composition and are applied directly to an insect or directly to a surface in an amount sufficient to control common pests. In a further embodiment, chlorfenapyr and dinotefuran are present in a composition useful to control common pests in synergistically effective amounts and are applied directly to an insect or directly to a surface.

In a further embodiment, the method provides an observed kill rate that exceeds an expected kill rate.

## BRIEF DESCRIPTION OF THE FIGURES

Figure 1: Time course for mortality of two bed bug strains that were exposed to residues of chlorfenapyr, dinotefuran or a combination of the two on a fabric surface and a vinyl surface.

Figure 2: Isobolic representation of Argentine ants *(Linepithema humile)* workers mortality after 72 h of exposure to combinations of chlorfenapyr and dinotefuran.

Figure 3: Isobolic representation of house fly adults *(Musca domestica)* mortality after 48h of exposure to combinations of chlorfenapyr and dinotefuran.

## DETAILED DESCRIPTION OF THE INVENTION

Compositions and methods for controlling common pests are described in more detail below. The present invention is better understood in this detailed description.

Chlorfenapyr is useful for common pest control programs due to its length of residual control and efficacy on pyrethroid resistant strains. Studies have shown, however, that this insecticide can be slow acting (Romero et al., Pest Manag Sci. 66(1):1243-1248, 2010. doi: 10.1002/ps.2002), but maintains high residual activity as long as four months after application.

Chlorfenapyr works to control pests by disrupting their cells' metabolic function. The oxidative removal of the N-ethoxymethyl group of chlorfenapyr by mixed function oxidases leads to a toxic form that has been identified as CL 303268. CL 303268 functions to uncouple oxidative phosphorylation in a common pest's mitochondria, resulting in disruption of ATP production and a loss of energy leading to cell dysfunction and the subsequent death of the pest. Because of its unique mode of action, chlorfenapyr is unlikely to show any cross resistance to standard neurotoxic insecticides, such as pyrethroids. Furthermore, unlike pyrethroids, chlorfenapyr is a non-repellent insecticide, meaning insects do not detect the insecticide and avoid areas where the insecticide is present.

Dinotefuran is useful for pest control due to its fast acting effect causing death shortly after initial treatment. Dinotefuran acts as an agonist of insect nicotinic acetylcholine receptors, disrupting the neurological system of the pest. However, it does not inhibit cholinesterase or interfere with sodium channels, like pyrethroid compounds. Dinotefuran is subject to photo degradation and like chlorfenapyr is a non-repellent insecticide and due to its unique mode of action works well against pyrethroid resistant insects.

The pest control industry seeks both a fast acting insecticide and an insecticide with long residual efficacy for common pest control programs that is capable of controlling pyrethroid resistant insects as well as pyrethroid susceptible insects. Bed bug infestations, in particular, are increasing worldwide and optimal methods for bed bug control and eradication are needed (Goddard *et al.,* 301(13): 1358-1366, 2009). Health consequences of bed bug infestations include nuisance biting and cutaneous and systemic reactions, allergic reactions, as well as contributing to mental health issues. There is also evidence that bed bugs and/or other common pests serve as disease vectors.

Common bed bugs are parasitic insects that feed on blood, particularly those of humans. Bed bugs typically feed at night and are often found in hiding places such as seams of mattresses, crevices in box springs and under baseboards or loose wall paper (Goddard. Midsouth Entomologist 4:57-62, 2011). Bed bugs have 5 nymphal stages prior to reaching adulthood. The life span of a bed bug, once reaching the adult stage, is about 6-12 months.

To combat this growing pest control problem, the inventors have combined a slow-acting (chlorfenapyr) and a fast-acting (dinotefuran) insecticide to produce not only rapid control of bed bugs, but also a combination that produces an unexpected additive and/or synergistic enhancement of rapid and lasting control of bed bugs and other pests. This combination resulted in an improved speed of kill of bed bugs, including pyrethroid resistant strains, both in contact treatment and through exposure to dry residues (also known as a residual effect).

It is an objective of the present invention to provide insecticidal compositions which solve the problems of reducing the insecticide dosage rate, enhancing the spectrum of activity, combining fast-acting, knock-down activity with prolonged control and/or combating insecticide resistance. The compositions described herein provide the following advantages. A faster speed of control of pests, against both pyrethroid susceptible and resistant pests, from direct contact with chlorfenapyr and dinotefuran compared to either chlorfenapyr or dinotefuran alone. Another advantage of the present invention includes a faster speed of control of pests, against both pyrethroid susceptible and resistant pests, from dry residual treatments compared to dry residual treatments of chlorfenapyr or dinotefuran alone. A third advantage is this combination of insecticides eliminates the potential for increased pyrethroid resistance as they both have a different mode of action than pyrethroids. In addition, chlorfenapyr and dinotefuran affect different pathways from each other, one metabolic and the other neurologic. Accordingly, there is a decreased probability that pests will develop a resistance to this combination in particular. Collectively, these advantages provide a method with an improved control of bed bugs.

Certain terms are defined herein, but this does not imply that terms without a specific definition are without definition. Those terms without a specific definition are to be understood within the accepted meaning in the art if they are not described herein.

## I. Definitions

The singular form of a term, as used herein, necessarily includes plural forms of the term. The plural form of a term necessarily includes the singular form of the term.

Chlorfenapyr is a member of the class of insecticides that is believed to disrupt oxidative phosphorylation in mitochondria, which can be fatal to an insect. Chlorfenapyr, as used herein, refers to (4-bromo-2-(4-chlorophenyl)-1-(ethoxymethyl)-5-(trifluoromethyl)-1H-pyrrole-3-carbonitrile). Chlorfenapyr is believed to be a relatively slow-acting insecticide.

Dinotefuran is a member of the class of insecticides believed to act via nicotinic acetylcholine receptor agonism, which can be fatal to an insect. Dinotefuran, as used herein, refers to N-methyl-N-[tetrahydro-3-furanyl) methyl]guanidine. Dinotefuran is believed to be a fast-acting insecticide.

For purpose of this application, the terms "insect" and "pest" and/or "common pest" may be used interchangeably and means insects that are known to infest settings, as defined below, rather than infest or harm plants. To be more precise, this application is directed to bed bugs (Cimicidae), cockroaches (Blattodea), ants (Formicidae) and flies (Diptera), including but not limited to house flies *(Musca domestica),* and all their developmental life stages (eggs, nymphs, larvae, pupae and adults) and forms (workers, soldiers and reproductives).

"Insecticide" and "insecticidal agent" are used in the common meaning and includes compounds, both synthetic and naturally occurring, which are harmful to insects and/or pests. Harm to an insect includes injury and/or death of the insect which is exposed to the insecticide or insecticidal agent. Insecticides are commonly used in agriculture, industry and in private household use.

The term "bed bug", as used herein, includes the genus *Cimex,* and including but not limited to the species *Cimex lectularis.* The term "bed bug" encompasses all life stages of the insect.

The term "controlling", as used herein, includes reducing the number of insects in an area following treatment of the area with an insecticide or combination of insecticides. The reduction in insect number includes injury to or death of the insect that is exposed to the area that is treated by the compositions of the present invention.

The term, "application", as used herein, includes treatment using a liquid, aerosol, granular, soluble concentrate, capsule suspension, emulsifiable concentrate, powder, dust, gel and or any other form of insecticide compositions discussed herein, where the insecticide is sprayed, dusted, painted or otherwise applied onto a surface or injected, foamed, or otherwise applied into cracks and crevices or provided in a station housing.

The term "synergistic effect", as used herein means an effect that exists whenever the action of a combination of active components is greater than the predicted effect based on the action of each of the components alone. Therefore, a synergistic combination is a combination of active components having an action that is greater than the predicted effect based on the action of each active component alone, and a synergistically effective amount is the amount of each active compound or the ratio between the active compounds required to provide a synergistic effect when the active compounds used in combination as an insecticide.

Pest infestations may occur in many settings. For purposes of this application, the term "settings" includes domestic dwellings (homes, apartments and dormitories, for example), offices, hotels, motels, inns, hospitals, assisted living centers, retirement communities, military barracks, homeless shelters, sheds, cabins, schools, resorts, mobile homes, mausoleums, campgrounds, industrial buildings, residential buildings, agriculture buildings, livestock facilities, warehouses, zoos, cemeteries, theme parks, autos, buses, boats, trains, planes, ships, cargo areas and any storage, shelter, or living spaces. It is to be understood that the "setting" locations listed may be where the pests live (habitat) or breed.

In the method of the present invention, the surface to be treated for pests is one or more of the following selected from the group consisting of: beds, mattress foundations, box springs porous and non-porous materials associated with beds or mattresses, headboards, bedframes, carpets, floor coverings, tile, empty dressers, clothes closets, draperies, high and low wall moldings, wall paper leather, vinyl or wood surfaces associated with beds and upholstered fabric, the perimeter of urban structures and/or dwelling structures, cabinets, garages, sheds, foundations, crawl spaces, cracks, crevices, void areas, moist areas, openings around pipes, sinks, under appliances, door frames, window openings, attic venting, porches, utility entry points, behind siding, eaves, weep holes, tree hollows, under decks and/or lawn furniture.

In addition to controlling bed bugs, the composition used in the method of the present invention may be used to control many nuisance pests, stored product pests and occasional invaders that infest structures, selected from: ants, cockroaches, and flies, such as house flies. Insects that primarily feed on crops or plants react differently than common household insects when contacted with insecticides. Accordingly, how an insecticide performs on crop insects or pests is not indicative of how it will perform on household or structure pests. Furthermore, the concentrations of the insecticides needed to be effective on common household or structure pests cannot be inferred from its use on crop insects or pests.

The term "expected kill rate", as used herein, includes the expected insect mortality when treating a surface with separate insecticides at a particular timepoint according to the Colby equation discussed below.

The term "observed kill rate", as used herein, includes the mortality rate when treating a surface with a combination of insecticides at a particular timepoint according to the Colby equation discussed below.

As envisioned by the inventors, the method of the present invention results in an observed kill rate that is at least up to 1% higher than the expected kill rate, at least up to 5% higher than the expected kill rate, at least up to 10% higher than the expected kill rate, at least up to 15% higher than the expected kill rate, at least up to 20% higher than the expected kill rate, at least up to 25% higher than the expected kill rate, or at least up to 30% higher than the expected kill rate at the same time point. In addition, the method of the present invention covers synergistic compositions as shown by comparing at least two individual components of the compositions with the combined composition using the Colby method described below.

There are multiple methods of calculating synergy, including the Colby method, the Wadley method, and/or the Tammes method. The current invention utilizes the Colby method in determining whether synergy exists between the individual components of the composition. However, it is to be understood that any of these methods may be used to determine whether a composition exhibits synergy. Before determining whether synergy exists between the individual components of the composition, Abbot's correction equation is used to correct observed treatment mortality using observed control mortality. The intention is to use the correction so as to provide an assurance that the observed mortality data used for the synergy calculations can be attributed to the induced mortality of the treatment and not to "naturally" occurring mortality.

The Colby method is as follows:

Colby's expected mortality per combination observation = % mortality (A) + % mortality (B) - % mortality (A) x % mortality (B)/ 100

$$\text{Synergy ratio} = \% \text{ observed mortality} / \% \text{ Colby expected mortality}.$$

Additive interactions have synergy ratios equal to 1, antagonistic interactions have synergy ratios of less than 1 and synergistic interactions have synergy ratios of greater than 1. (Colby, S.R. Calculation of the synergistic and antagonistic response of herbicide combinations. Weeds 1967, 15, 20-22)

For example, a treatment of a surface with insecticide A may result in an insect mortality of 30% 2 days after application, while a treatment of a surface with insecticide B may result in an insect mortality of 15% 2 days after application. A combined treatment of a surface with both insecticide A & B results in an insect mortality of 70%. Applying the Colby method to the above example you get a synergy ratio of greater than 1. The expected mortality is calculated as follows: (30%+15%-((30%*15%)/100)= 40.5%. The synergy ratio is calculated as follows: 70%/40.5%= 1.72. Accordingly, the example above shows a synergistic effect for the insecticidal composition as compared to the individual components of the composition as the synergy ratio is greater than 1.

**II. Insecticides**

Insecticides useful in the invention include the following compounds.

**Organo(thio)phosphates:** acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon. **Carbamates:** alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate. **Insect growth regulators:** a) **chitin synthesis inhibitors:** benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) **ecdysone antagonists:** halofenozide, methoxyfenozide, tebufenozide, azadirachtin; c) **juvenoids:** pyriproxyfen, methoprene, fenoxycarb; d) **lipid biosynthesis inhibitors:** spirodiclofen, spiromesifen, spirotetramat. **Nicotinic receptor agonists/antagonists compounds:** clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane. **GABA antagonist compounds:** endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide. **Macrocyclic lactone insecticides:** abamectin, emamectin, milbemectin, lepimectin, spinosad, spinetoram. **Mitochondrial electron transport inhibitor** (METI) I **acaricides:** fenazaquin, pyridaben, tebufenpyrad, tolfenpyrad, flufenerim; **METI II and III compounds:** acequinocyl, fluacyprim, hydramethylnon; **Uncouplers:** chlorfenapyr; **Oxidative phosphorylation inhibitors:** cyhexatin, diafenthiuron, fenbutatin oxide, propargite. **Moulting disruptor compounds:** cryomazine. **Mixed function oxidase inhibitors:** piperonyl butoxide. **Sodium channel blockers:** indoxacarb, metaflumizone. **Ryanodine receptor inhibitors:** chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyanophenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide; **Others:** benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy] methyl]-1,3,4,4a,5,6,6a,12,12a,12b-decahydro-12-hydroxy-4,6a,12b-trimethyl-11-oxo-9-(3-pyridinyl)-2H,11H-naphtho [2,1-b]pyrano[3,4-e]pyran-3,6-diyl] cyclopropaneacetic acid ester.

Pyrethroids which are useful as insecticides include: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethroid I and II, resmethrin, silafluofen, tau-fluvalinate, tefluthrin, tetramethrin, tralomethrin, transfluthrin, profluthrin, dimefluthrin.

### III. Compositions

The compositions described herein might be present in any customary types of insecticidal compositions, e.g., solutions, emulsions, suspensions, dusts, powders, pastes, granules, pressings, capsules, and mixtures thereof. The composition components may exist in separate concentrates, and then tank mixed, or may exist in a single concentrate, or may exist in a micro-encapsulated product or may exist in an application ready solution that requires no further dilution.

Examples for composition types are suspensions (e.g. SC, OD, FS), emulsifiable concentrates (e.g. EC), emulsions (e.g. EW, EO, ES, ME), capsules (e.g. CS, ZC, ZE, ZW, WS, DS), pastes, pastilles, wettable powders or dusts (e.g. WP, SP, WS, DP, DS), pressings (e.g. BR, TB, DT), granules (e.g. WG, SG, WSG, GR, FG, GG, MG), insecticidal articles (e.g. LN), as well as gel formulations (e.g. GF) and ready-to-use baits. These and further compositions types are defined in the "Catalogue of pesticide formulation types and international coding system", Technical Monograph No. 2, 6th Ed. May 2008, CropLife International. It is to be understood that the invention is not limited to the example composition types listed herein. It is to be further understood that the additional components added to the active compounds to make the composition may vary based on the composition type chosen. In addition, it is to be understood that with respect to gel, granular, solid or liquid bait formulations a lower concentration of insecticide may be used to slow the kill rate in order to allow the pest to move away from the bait location before expiring.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005. It is to be understood that the composition will be tailored as needed for the final composition form.

Preparation of the composition depends on the final composition type chosen. Various examples of additional components that may be added to the active compounds to create the chosen composition type are listed below.

In addition, the active compounds may be applied sequentially, in combination or even may be combined at the time of application. For either the composition or for sequential application the ratio by weight of chlorfenapyr to dinotefuran may be 1:1; or in a range between 1:5 and 5:1, 1:10 and 10:1, or 1:20 and 20:1, 1:50 and 50:1, 1:100 and 100:1.

The insecticidal composition can furthermore comprise auxiliaries conventionally used for insecticidal products. Examples for suitable auxiliaries are solvents, liquid carriers, solid carriers or fillers, dispersants, emulsifiers (such as further solubilizers, protective colloids, surfactants and adhesion agents), wetters, adjuvants, penetration enhancers, organic and inorganic thickeners, anti-freezing agents, anti-foaming agents, humectants, repellents, attractants, feeding stimulants, compatibilizers, anti-microbial agents, anti-freezing agents, anti-foaming agents, colorants, tackifiers, propellents, anti-corrosion agents and binders.

Suitable solvents and liquid carriers are water and organic solvents, such as mineral oil fractions of medium to high boiling point, e.g. hexane, kerosene, diesel oil; oils of vegetable or animal origin, e.g. methylated vegetable oils; alkylamides; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone, acetone; esters, e.g. lactates, carbonates, fatty acid esters, gamma-butyrolactone; fatty acids; phosphonates; amines; amides, e.g. N-methylpyrrolidone, fatty acid dimethylamides; propellants, e.g. DME and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharide powders, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, corn meal, and mixtures thereof.

Suitable surfactants are surface-active compounds, such as anionic, cationic, nonionic and amphoteric surfactants, block co-polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2014 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, calcium sulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated phosphate esters, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide and/or butylene oxide may be employed for the alkoxylation, preferably ethylene oxide. Mixed co-polymers of ethylene oxide and/or butylene oxide and/or propylene oxide of varying molecular weights may be also be employed for alkoxylation. Examples of N-substituted fatty acid amides are fatty acid glucamides or fatty acid alkanolamides. Examples of esters are fatty acid esters, glycerol esters or monoglycerides. Examples of sugar-based surfactants are sorbitans, sorbitan esters, (e.g., sorbitan monolaurate) ethoxylated sorbitans, sucrose and glucose esters or alkylpolyglucosides. Examples of polymeric surfactants are polymer or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type block co-polymers comprising blocks of polyethylene oxide, polybutylene oxide and/or polypropylene oxide, or of the A-B-C type comprising alkanol, polyethylene oxide, polybutylene oxide and/or polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a negligible or even no pesticidal activity themselves, and which improve the biological performance of the insecticidal agents on the target. Examples are surfactants, mineral or vegetable oils, and other auxiliaries. It is to be understood that the insecticide composition may include a variety of composition components, including but not limited to those set forth herein, added to the active compounds.

Suitable dispersants are lignosulfonates, cationic and anionic surfactants.

Suitable propellants are butane, isobutene, propane, and/or blends thereof, dimethylether, 152A and 134A.

Suitable thickeners are polysaccharides (e.g. xanthan gum, carboxymethylcellulose), organic and inorganic clays such as xanthan gum, guar gum, polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicone emulsions, alcohols, fatty acids, salts of fatty acids, fluoro-organic compounds and mixtures thereof.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable binders are polyvinylpyrrolidons, polyvinyl acetates, polyvinyl alcohols, polyacrylates, biological or synthetic waxes, and cellulose ethers.

Powders, materials for spreading and/or for dusts can be prepared by mixing or concomitantly grinding the compounds the respective active compounds present in the inventive mixtures and if appropriate, further active substances, with at least one solid carrier. Components may be ground separately and ground components may be combined together into the final insecticide composition.

Examples of formulation types are suspensions, emulsifiable concentrates, aerosols, emulsions, micro-encapsulations, pastes, pastilles, wettable powders or dusts or granules, which can be water-soluble or wettable, as well as gel formulations.

Examples for composition types and their preparation are:

(i) Dispersible concentrates (DC)
An example of a dispersible concentrate may be a combination of the insecticidal agents according to the invention and dispersant (e. g. polyvinylpyrrolidone), surfactant dissolved in organic solvent and/or water. Dilution with water gives a dispersion.

(ii) Emulsifiable concentrates (EC)
An example of an emulsifiable concentrate may be a combination of the insecticidal agents according to the invention and emulsifiers (e.g. calcium dodecylbenzenesulfonate and castor oil ethoxylate) dissolved in up to 100 wt% water-insoluble organic solvent. Dilution with water gives an emulsion.

(iii) Suspensions (SC, OD)
An example of creating a suspension may include: In an agitated ball mill, wet mill, or dry mill a combination of the insecticidal agents according to the invention are comminuted with addition of dispersants and wetting agents (e.g. sodium lignosulfonate and alcohol ethoxylate), thickener (e.g. xanthan gum), anti-foamer and water to give a fine active substance suspension. Dilution with water gives a stable suspension of the active substance.

(iv) Water-dispersible granules and water-soluble granules (WG, SG)
An example of water-dispersible granules or water soluble granules may include insecticidal agents according to the invention that may or may not be ground finely with addition of dispersants and wetting agents (e.g., sodium lignosulfonate and alcohol ethoxylate) and prepared as water-dispersible or water-soluble granules by means of technical appliances (e.g., extrusion, spray tower, fluidized bed). Dilution with water gives a stable dispersion or solution of the active substance.

(v) Water-dispersible powders and water-soluble powders (WP, SP, WS)
An example of water-dispersible powders and water-soluble powders may include a combination of the insecticidal agents according to the invention that may or may not be ground in a rotor-stator mill or other type of milling devices with addition of dispersants (e.g., sodium lignosulfonate), wetting agents (e.g., alcohol ethoxylate) and up to solid carrier, e.g. silica gel. Dilution with water gives a stable dispersion or solution of the active substance.

(vi) Gel (GW, GF)
An example of a Gel may include a combination of: in an agitated ball mill, wet mill, or air mill, the insecticidal agents according to the invention are comminuted with addition of dispersants (e.g. sodium lignosulfonate), thickener (e.g. carboxymethylcellulose) and up to water to give a fine suspension of the active substance. Dilution with water gives a stable suspension of the active substance.

(vii) Microemulsion (ME)
An example of a microemulsion may include a combination of the insecticidal agents according to the invention are added to organic solvent blend, surfactant blend (e.g. alcohol ethoxylate and arylphenol ethoxylate), and water. This mixture is stirred for 1 h to produce spontaneously a thermodynamically stable microemulsion.

(viii) Microcapsules (CS)

An example of a microcapsule formulation may include a combination of an oil phase comprising the insecticidal agents according to the invention, water insoluble organic solvent (e.g. aromatic hydrocarbon), acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising the insecticidal agents according to the invention, water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of a polyurea microcapsules.

(ix) Dustable powders (DP, DS)

An example of a dustable powder composition may include the insecticidal agents according to the invention are ground finely and mixed intimately with solid carrier, e.g. finely divided kaolin.

(x) Granules (GR, FG)

An example of a granule formulation may include the insecticidal agents according to the invention is ground finely and associated with solid carrier (e.g. silicate). Granulation is achieved by extrusion, spray-drying or the fluidized bed.

(xi) Ultra-low volume liquids (UL)

An example of an Ultra-low volume liquid may include a combination of the insecticidal agents according to the invention dissolved in organic solvent, e.g. aromatic hydrocarbon, vegetable oil.

(xii) Gel or Ready-to-use Bait

An example of a gel or ready-to-use bait may be in a solid, liquid or gel form. It may also include a tablet or extruded form. A gel or ready-to-use bait may include a combination of two or more of the following including: the insecticidal agents, attractant, gel matrix, one or more buffers, water, biocide, and/or bittering agent.

The compositions types i) to xii) may optionally comprise one or more further auxiliaries, such as bactericides, anti-freezing agents, anti-foaming agents, and/or colorants.

The compounds of the mixtures can be used in a mixture or independently in successive application. They can be used as such or in the form of their compositions, e.g. directly sprayable solutions, powders, suspensions, dispersions, spraying, atomizing, aerosol, dusting, spreading, brushing, immersing, or pouring. The application forms depend entirely on the intended purposes; it is intended to ensure in each case the finest possible distribution of the compounds present in the mixtures.

According to the invention, the compound I and compound II is to be understood to denote that at least the compound I and compound II occur simultaneously at the site of the action in an effective amount. This can be done by applying Compound I and compound II simultaneously, either jointly (tank mix) or separately, or in succession, wherein the time interval between the individual applications is selected to ensure that the active substance applied first still occurs at the site of action in a sufficient amount at the time of application of the further active substance(s). The order of application is not essential for working of the present invention.

The insecticidal compositions generally comprise between 0.1 and 90%, preferably between 0.5 and 75%, and most preferably between 0.1 and 40%, by weight of active substance or active substances. The active substances are employed in a purity range from 90% up to 100%, preferably from 95% up to 100% (according to NMR spectrum). In the mixtures of the present invention, the weight ratio of the compounds generally depends from the properties of the compounds of the inventive mixtures.

The amount of active substance, either alone or in combination, applied to a surface depends on the kind and size of application area and on the desired effect. Chlorfenapyr based on 40% soluble granule may be applied at a concentration of 1 g to 80 g per 3.78l (1 g to 80 g per gallon), 1 g to 60 g per 3.78 l (1 g to 60 g per gallon), or 5 g to 50 g per 3.78 l (5 g to 50 g per gallon). Dinotefuran based on 40% soluble granule may be applied at a concentration of .01g to 50g per 3.78 l (.01 g to 50 g per gallon), 0.1 g to 40 g per 3.78l (0.1 g to 40 g per gallon), or 1g to 30g per 3.78 l (1 g to 30 g per gallon). One of ordinary skill in the art would be knowledgeable in determining an effective amount of chlorfenapyr and dinotefuran to be used in the present method to exercise control of bed bugs. Dinotefuran may be combined with chlorfenapyr in a ratio between 200:1 and 1:200, 100:1 and 1:100; 50:1 and 1:50, 20:1 and 1:20, 10:1 and 1:10, 5:1 and 1:5, 1:2 and 2:1 and/or in a ratio of 1:1.

Various types of oils, wetters, adjuvants, and other pesticides may be added to the active substances or the compositions comprising them as premix or, if appropriate not until immediately prior to use (tank mix). These agents can be admixed with the compositions according to the invention in a weight ratio of between 1:100 and 100:1, preferably 1:10 and 10:1.

The user applies the composition according to the invention usually from a predosed device, a backpack sprayer, or a spray tank. Usually, the insecticidal composition is made up with water, buffer, and/or further auxiliaries to the desired application concentration and the ready-to-use spray dilution or the insecticidal composition according to the invention is thus obtained. The composition may be applied in a range of .1-80g per 3.78 l (.1-80g per gallon) applied to an area of 0.93 to 92.9 m$^2$ (10-1000 square feet) or more, preferably 1 - 60g per 3.78 1 (1-60g per gallon) applied to an area of 0.93 to 92.9 m$^2$ (10-1000 square feet) or more, or most preferable 5 - 50g per 3.781 (5-50 g per gallon) applied to an area of 0.93 to 92.9 m$^2$ (10-1000 square feet) or more.

According to one embodiment, individual components of the composition according to the invention such as parts of a kit or parts of a binary or ternary mixture may be mixed by the user himself in a spray tank and further auxiliaries may be added, if appropriate.

In a further embodiment, either individual components of the composition according to the invention or partially premixed components, e. g. components comprising chlorfenapyr and dinotefuran, may be mixed by the user in a spray tank and further auxiliaries and additives may be added, if appropriate.

In a further embodiment, either individual components of the composition according to the invention or partially premixed components, e. g. components comprising chlorfenapyr and dinotefuran, can be applied jointly (e.g. after tank mix) or consecutively.

The invention will be better understood by the non-limiting examples which follow.

## EXAMPLES

### Example 1

A study was conducted to evaluate the effect of residual applications of chlorfenapyr and dinotefuran against bed bugs.

### Materials and Methods

Target species: *Cimex lectularius,* adult males and females (7 to 10 days of age). Two strains were used in the study, NY-1 strain which was resistant to deltamethrin, a pyrethroid, and LA-1 strain which was found to be susceptible to deltamethrin.

Bed bug cohorts were subjected to the following test conditions: (1) 0.5% chlorfenapyr (suspension concentrate), (2) 0.3% dinotefuran (water soluble granule), (3) 0.5% chlorfenapyr + 0.3% dinotefuran and (4) untreated control (water).

Residual Spray: Two substrates (a porous and non-porous surface) were sprayed with each treatment. The porous material was mattress fabric. The non-porous material was vinyl paneling. After the product was dry, three replicates of both sexes with ten bed bugs each from LA-1 and NY-1 were continuously exposed to the treated surfaces and mortality was recorded at 1h, 2h, 4h, 24h, 48h, 4d, and 8 d. A total of 960 bed bugs were used (4 treatments X 2 populations X 10 individuals X 2 sexes X 2 substrates X 3 replicates).

Application Equipment: A 4 oz. fine mist spray bottle (SQB.4FMS from ProChemical and Dye, Somerset, MA) was used for application of treatments.

### Results

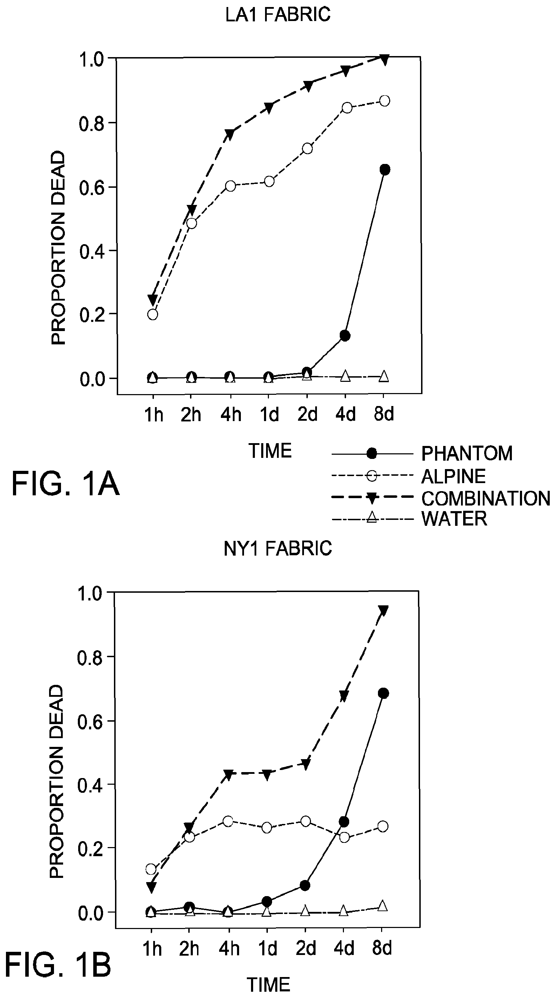

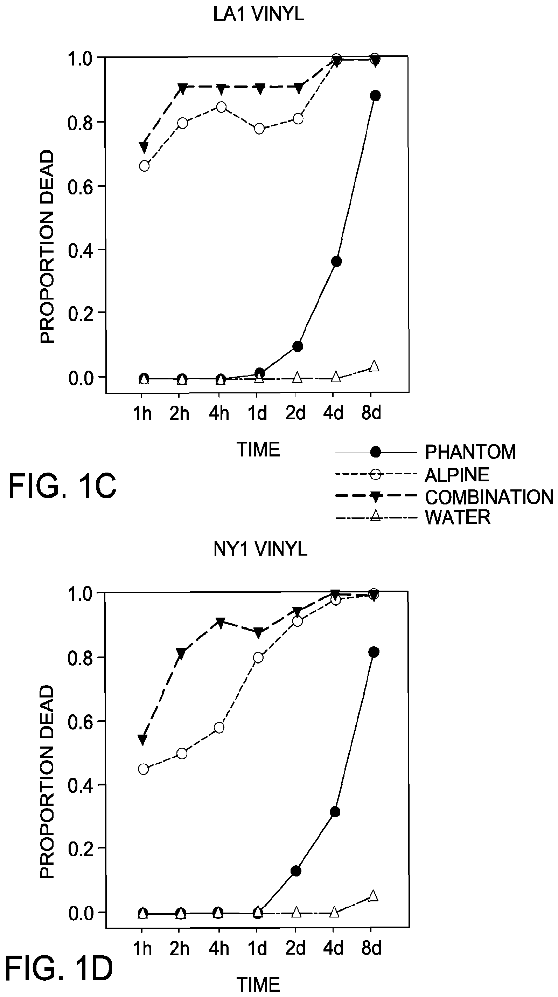

Residual Exposure: The summarized results for residual exposure are presented in Figure 1. Chlorfenapyr exhibited a delayed onset of mortality on the bed bug strains tested.

However, mortality caused by chlorfenapyr gradually increased until the end of the experiment.

Mortality caused by dinotefuran started earlier than with chlorfenapyr in both populations on both substrates. However, it is apparent that the effect of dinotefuran on the NY-1 population and LA-1 population differs based on substrate. Given these results, dinotefuran when used alone as a residual may be limited in its effectiveness.

Using the Colby equation after correcting for control mortality with Abbot's equation, dinotefuran and chlorfenapyr act synergistically against both the resistant and susceptible populations. In addition, the study overall indicates an accelerated rate of mortality when bed bugs are continuously exposed to residues of chlorfenapyr and dinotefuran in combination compared with either product alone.

The Colby Method was employed to determine whether the combination of dinotefuran and chlorfenapyr had a synergistic effect. A synergy ratio of greater than 1 was found for LA Strain for all time intervals tested (Table 2). A synergy ratio of greater than 1 was found for NY 1 - pyrethroid resistant strain for all time intervals tested except the 1 hour time interval on a fabric substrate (Table 3). Accordingly, combined use of chlorfenapyr and dinotefuran has been shown to have a synergistic effect when used to control bed bugs.

**Table 2. Substrate:**

| Fabric | | | | | | | |
|---|---|---|---|---|---|---|---|
| % Mortality with Continuous Exposure | 1 hr | 2 hr | 4 hr | 1 day | 2 day | 4 day | 8 day |
| Chlorfenapyr (0.5%) | 0.00 | 0.00 | 0.00 | 0.00 | 1.67 | 13.3 3 | 65.00 |
| Dinotefuran (0.3%) | 20.00 | 48.33 | 60.00 | 61.67 | 71.67 | 84.4 8 | 86.67 |
| Combination | 25.00 | 53.33 | 76.67 | 85.00 | 91.67 | 96.6 7 | 100.00 |
| Synergy Ratio | 1.25 | 1.10 | 1.28 | 1.38 | 1.27 | 1.12 | 1.05 |
| Water Control | 0.00 | 0.00 | 0.00 | 0.00 | 0.00 | 0.00 | 0.00 |

| Abbot's Corrected Mortality | 1 hr | 2 hr | 4 hr | 1 day | 2 day | 4 day | 8 day |
|---|---|---|---|---|---|---|---|
| Chlorfenapyr (0.5%) | 0.00 | 0.00 | 0.00 | 0.00 | 1.67 | 13.3 3 | 65.00 |
| Dinotefuran (0.3%) | 20.00 | 48.33 | 60.00 | 61.67 | 71.67 | 84.4 8 | 86.67 |
| Combination | 25.00 | 53.33 | 76.67 | 85.00 | 91.67 | 96.6 7 | 100.00 |

| Colby Expected Value | 1 hr | 2 hr | 4 hr | 1 day | 2 day | 4 day | 8 day |
|---|---|---|---|---|---|---|---|
| Combination | 20.00 | 48.33 | 60.00 | 61.67 | 72.14 | 86.5 5 | 95.33 |

**Table 3.**

| Bed Bug Strain: NY 1 (New York 1 - Pyrethroid resistant strain )<br>Substrate: Fabric | | | | | | | |
|---|---|---|---|---|---|---|---|
| % Mortality with Continuous Exposure | 1 hr | 2 hr | 4 hr | 1 day | 2 day | 4 day | 8 day |
| Chlorfenapyr (0.5%) | 0.00 | 1.67 | 0.00 | 3.33 | 8.33 | 28.33 | 68.33 |
| Dinotefuran (0.3%) | 13.33 | 23.33 | 28.33 | 26.67 | 28.33 | 23.33 | 26.67 |
| Combination | 8.33 | 26.67 | 43.33 | 43.33 | 46.67 | 68.33 | 95.00 |
| Synergy Ratio | 0.62 | 1.08 | 1.53 | 1.49 | 1.36 | 1.52 | 1.25 |
| Water Control | 0.00 | 0.00 | 0.00 | 0.00 | 0.00 | 0.00 | 1.67 |

| Abbot's Corrected Mortality | 1 hr | 2 hr | 4 hr | 1 day | 2 day | 4 day | 8 day |
|---|---|---|---|---|---|---|---|
| Chlorfenapyr (0.5%) | 0.00 | 1.67 | 0.00 | 3.33 | 8.33 | 28.33 | 67.79 |
| Dinotefuran (0.3%) | 13.33 | 23.33 | 28.33 | 26.67 | 28.33 | 23.33 | 25.42 |
| Combination | 8.33 | 26.67 | 43.33 | 43.33 | 46.67 | 68.33 | 94.92 |

| Colby Expected Value | 1 hr | 2 hr | 4 hr | 1 day | 2 day | 4 day | 8 day |
|---|---|---|---|---|---|---|---|
| Combination | 13.33 | 24.61 | 28.33 | 29.11 | 34.30 | 45.05 | 75.98 |

Table 4.

| Bed Bug Strain: LA 1 (Los Angeles 1 - Pyrethroid Susceptible Strain )<br>Substrate: Vinyl | | | | | | | |
| --- | --- | --- | --- | --- | --- | --- | --- |
| % Mortality with Continuous Exposure | 1 hr | 2 hr | 4 hr | 1 day | 2 day | 4 day | 8 day |
| Chlorfenapyr (0.5%) | 0.00 | 0.00 | 0.00 | 1.67 | 10.00 | 36.67 | 88.33 |
| Dinotefuran (0.3%) | 66.67 | 80.00 | 85.00 | 78.33 | 81.67 | 100.00 | 100.00 |
| Combination | 73.33 | 91.67 | 91.67 | 91.67 | 91.67 | 100.00 | 100.00 |
| Synergy Ratio | 1.10 | 1.15 | 1.08 | 1.16 | 1.10 | 1.00 | 1.00 |
| Water Control | 0.00 | 0.00 | 0.00 | 0.00 | 0.00 | 0.00 | 3.33 |
| Abbot's Corrected Mortality | 1 hr | 2 hr | 4 hr | 1 day | 2 day | 4 day | 8 day |
| Chlorfenapyr (0.5%) | 0.00 | 0.00 | 0.00 | 1.67 | 10.00 | 36.67 | 88.33 |
| Dinotefuran (0.3%) | 66.67 | 80.00 | 85.00 | 78.33 | 81.67 | 100.00 | 100.00 |
| Combination | 73.33 | 91.67 | 91.67 | 91.67 | 91.67 | 100.00 | 100.00 |
| Colby Expected Value | 1 hr | 2 hr | 4 hr | 1 day | 2 day | 4 day | 8 day |
| Combination | 66.67 | 80.00 | 85.00 | 78.69 | 83.50 | 100.00 | 100.00 |

Table 5.

| Bed Bug Strain: NY 1 (New York 1 - Pyrethroid resistant strain )<br>Substrate: Vinyl | | | | | | | |
| --- | --- | --- | --- | --- | --- | --- | --- |
| % Mortality with Continuous Exposure | 1 hr | 2 hr | 4 hr | 1 day | 2 day | 4 day | 8 day |
| Chlorfenapyr (0.5%) | 0.00 | 0.00 | 0.00 | 0.00 | 13.33 | 31.67 | 81.67 |
| Dinotefuran (0.3%) | 45.00 | 50.00 | 58.33 | 80.00 | 91.67 | 98.33 | 100.00 |
| Combination | 55.00 | 81.67 | 91.67 | 88.33 | 95.00 | 100.00 | 100.00 |
| Synergy Ratio | 1.22 | 1.63 | 1.57 | 1.10 | 1.02 | 1.01 | 1.00 |
| Water Control | 0.00 | 0.00 | 0.00 | 0.00 | 0.00 | 0.00 | 5.00 |
| Abbot's Corrected Mortality | 1 hr | 2 hr | 4 hr | 1 day | 2 day | 4 day | 8 day |
| Chlorfenapyr (0.5%) | 0.00 | 0.00 | 0.00 | 0.00 | 13.33 | 31.67 | 81.67 |
| Dinotefuran (0.3%) | 45.00 | 50.00 | 58.33 | 80.00 | 91.67 | 98.33 | 100.00 |
| Combination | 55.00 | 81.67 | 91.67 | 88.33 | 95.00 | 100.00 | 100.00 |
| Colby Expected Value | 1 hr | 2 hr | 4 hr | 1 day | 2 day | 4 day | 8 day |
| Combination | 45.00 | 50.00 | 58.33 | 80.00 | 92.78 | 98.86 | 100.00 |

**Example 2**

In this experiment, dual combinations of active ingredients, dinotefuran and chlorfenapyr, were tested to identify potential synergistic interactions via limited exposure glass vial contact assays against male German cockroaches, *Blattella germanica.*

Methods: *Independent dose response testing.* Dose responses to each compound were found for yellowfever mosquitoes and German cockroaches following a glass vial residual contact assay with one hour exposures. Briefly, glass vials (20 mL scintillation) were treated with 445 $\mu$L of varying concentrations of each technical grade active ingredient dissolved in acetone. Vials were turned on their sides and placed on an automated roller table. The vials were rolled (6 rpm) uncapped to allow an even coating of the treatment. After rolling, vials were allowed to completely dry for at least an hour. Each treatment was replicated five times.

Prior to exposure, cockroaches were incapacitated using carbon dioxide ($CO_2$). Approximately six insects were placed into each vial and were exposed to treatments at room temperature for exactly one hour. A small amount of $CO_2$ was

used to incapacitate the insects within vials to facilitate removal from treatment. Insects were then transferred to 16 oz plastic holding containers. Cockroaches were provided dry cat food and a cotton wick moistened with purified water. Holding containers were moved into an incubator with environmental conditions of 27°C and 80% relative humidity.

*Synergy testing:* After dose response testing, assays combining two active ingredients were conducted using the same method described above. Concentrations used for each active ingredient were below and above LC (lethal concentration) 50 rates. The rates used in the combination treatments for each active ingredient, chlorfenapyr and dinotefuran, were the same concentrations used when they were tested independently (below and above LC 50) as shown in the tables below.

Analysis: *Independent dose response testing.* Dose response analyses were conducted using a log dose probit analysis.

*Synergy analysis:* When applied in combination, the toxicological interaction between two compounds is classified based on the resultant impact on the observed effect. The interaction is termed antagonistic when the observed effect is less than the Colby expected mortality based on the responses of the two compounds applied independently at the same doses. When the observed effect of two compounds applied in combination is equal to that of the Colby expected mortality based on the responses of the two compounds applied independently, the relationship is described as additive. Finally, a synergistic interaction means that the effect of the two compounds applied in combination is greater than the Colby expected mortality based on the responses of the two compounds applied independently at the same doses. Mortality levels at Day 3 were used to determine whether there was a synergistic effect in the combined use of dinotefuran and chlorfenapyr.

Abbott's correction for control mortality and the Colby method for testing synergy were used to analyze combination data. The method is as follows:

Abbott's corrected mortality per observation (at 3 DAE) = [(% observed mortality - % control mortality) / (100% - % control mortality)] x 100.

Colby's expected mortality per combination observation = % mortality (A) + % mortality (B) - (% mortality (A) x % mortality (B)) / 100.

$$\text{Synergy ratio} = \% \text{ observed mortality} / \% \text{ Colby expected mortality}.$$

Additive interactions have synergy ratios equal to 1, antagonistic interactions have synergy ratios of less than 1, and synergistic interactions have synergy ratios of greater than 1.

Results: *Cockroach:* Chlorfenapyr and dinotefuran (Table 6) overall provided a synergistic effect. Chlorfenapyr alone was not efficacious but its addition to dinotefuran increased mortality.

Overall Conclusions: These assays demonstrated potential utility in combining chlorfenapyr and dinotefuran, for cockroach control. Although chlorfenapyr alone provided low efficacy against cockroaches in these assays, including it in a mixture with dinotefuran increased the efficacy of dinotefuran.

**Table 6. Percent Mortality of German cockroaches *(Blattella germanica)* when exposed to combinations of chlofenapyr and dinotefuran via glass vial contact assay. (Exposure: 1 hour; Date: September 6, 2013)**

| % Mortality at 1 d | | | | | |
|---|---|---|---|---|---|
| | 73.2 | 0.00 | 0.0 | 6.7 | 13.3 | 80.0 |
| | 7.32 | 0.00 | 0.0 | 16.7 | 46.7 | 76.7 |
| | 0.732 | 0.00 | 0.0 | 13.3 | 10.0 | 86.7 |
| Chlorfenapyr | 0.0732 | 0.00 | 0.0 | 0.0 | 20.0 | 56.7 |
| | 0 | 0.00 | 0.0 | 3.3 | 13.3 | 46.7 |
| | mg/m$^2$ | 0 | 0.0732 | 0.366 | .732 | 3.66 |
| | Dinotefuran | | | | | |

% Mortality at 2 d

| Chlorfenapyr | 73.2 | 10.0 | 16.7 | 20.0 | 80.0 | 10.0 |
| | 7.32 | 0.0 | 16.7 | 50.0 | 83.3 | 0.0 |
| | 0.732 | 0.0 | 23.3 | 26.7 | 93.3 | 0.0 |
| | 0.0732 | 0.0 | 0.0 | 33.3 | 66.7 | 0.0 |
| | 0 | 0.0 | 3.3 | 20.0 | 56.7 | 0.0 |
| | mg/m$^2$ | **0.00** | **0.0732** | **0.366** | **0.732** | **3.66** |
| | | Dinotefuran | | | | |

% Mortality at 3 d

| Chlorfenapyr | 73.2 | 0.0 | 13.3 | 16.7 | 20.0 | 80.0 |
| | 7.32 | 0.0 | 0.0 | 16.7 | 50.0 | 83.3 |
| | 0.732 | 0.0 | 0.0 | 26.7 | 30.0 | 93.3 |
| | 0.0732 | 0.0 | 3.3 | 0.0 | 33.3 | 66.7 |
| | 0 | 0.0 | 0.0 | 3.3 | 20.0 | 60.0 |
| | mg/m$^2$ | **0** | **0.0732** | **0.366** | **0.732** | **3.66** |
| | | Dinotefuran | | | | |

Abbott's Corrected Mortality

% Mortality at 3 d

| Chlorfenapyr | 73.2 | 0.0 | 13.3 | 16.7 | 20.0 | 80.0 |
| | 7.32 | 0.0 | 0.0 | 16.7 | 50.0 | 83.3 |
| | 0.732 | 0.0 | 0.0 | 26.7 | 30.0 | 93.3 |
| | 0.0732 | 0.0 | 3.3 | 0.0 | 33.3 | 66.7 |
| | 0 | 0.0 | 0.0 | 3.3 | 20.0 | 60.0 |
| | mg/m$^2$ | **0** | **0.0732** | **0.366** | **0.732** | **3.66** |
| | | Dinotefuran | | | | |

Colby Expected Mortality

% Mortality 3 d

| Chlorfenapyr | 73.2 | 0.0 | 0.0 | 3.3 | 20.0 | 60.0 |
| | 7.32 | 0.0 | 0.0 | 3.3 | 20.0 | 60.0 |
| | 0.732 | 0.0 | 0.0 | 3.3 | 20.0 | 60.0 |
| | 0.0732 | 0.0 | 0.0 | 3.3 | 20.0 | 60.0 |
| | 0 | 0.0 | 0.0 | 3.3 | 20.0 | 60.0 |
| | mg/m$^2$ | **0** | **0.0732** | **0.366** | **0.732** | **3.66** |
| | | Dinotefuran | | | | |

Synergy Ratio

% Mortality at 3 d

| Chlorfenapyr | 73.2 | 1.0 | >1 | 5.0 | 1.0 | 1.3 |
| | 7.32 | 1.0 | 1.0 | 5.0 | 2.5 | 1.4 |
| | 0.732 | 1.0 | 1.0 | 8.0 | 1.5 | 1.6 |
| | 0.0732 | 1.0 | >1 | 0.0 | 1.7 | 1.1 |
| | 0 | 1.0 | 1.0 | 1.0 | 1.0 | 1.0 |
| | mg/m$^2$ | **0** | **0.0732** | **0.366** | **0.732** | **3.66** |
| | | Dinotefuran | | | | |

**Example 3**

In this experiment, dual combinations of active ingredients, dinotefuran and chlorfenapyr, were tested to identify potential synergistic interactions via limited exposure glass vial contact assays against Argentine ant workers *(Linepithema humile)* and house fly *(Musca domestica)* adults.

Methods: *Independent dose response testing.* Dose responses to each compound were found for Argentine worker ants and house fly adults following a glass vial residual contact assay with one hour exposures. Briefly, glass vials (20 mL scintillation) were treated with 445 μL of varying concentrations of each technical grade active ingredient dissolved in acetone. Vials were turned on their sides and placed on an automated roller table. The vials were rolled (6 rpm) uncapped to allow an even coating of the treatment. After rolling, vials were allowed to completely dry for approximately 30 minutes. Each treatment was replicated five times.

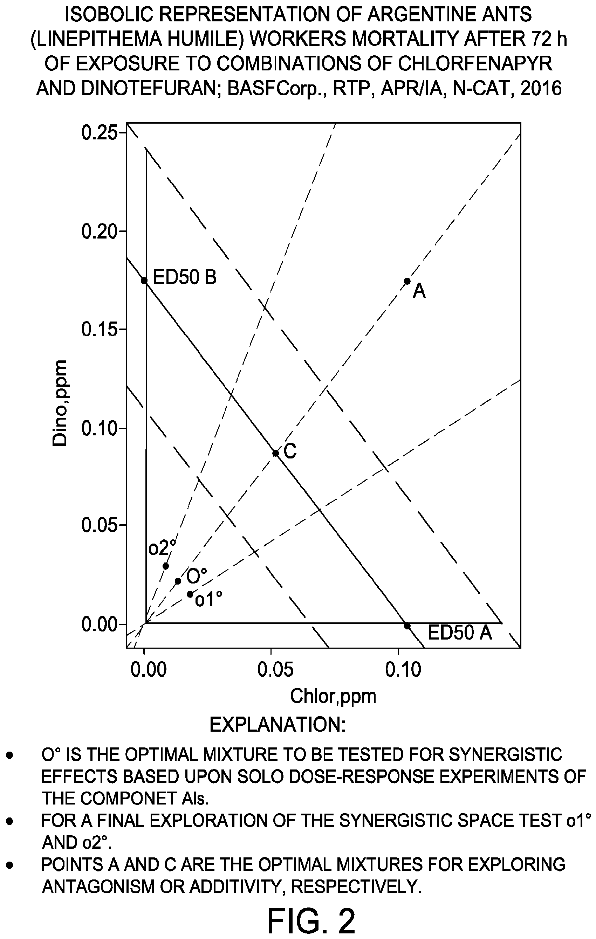

Prior to infestation, a cotton pellet (dia. 5.5 mm, Richmond) soaked in 10% sugar water was placed into each vial as a food and water source for the Argentine ants. Argentine ant workers were incapacitated using a chilled holding container (e.g., Petri dish). Six insects were placed into each vial. Test vials were loosely capped to allow ventilation. Test vials were held at room temperature in compartmented boxes. Mortality was assessed at 24, 48, and 72 hours (h) after infestation. Figure 2 is an isobolic representation of Argentine ants *(Linepithema humile)* workers mortality after 72 h of exposure to combinations of chlorfenapyr and dinotefuran.

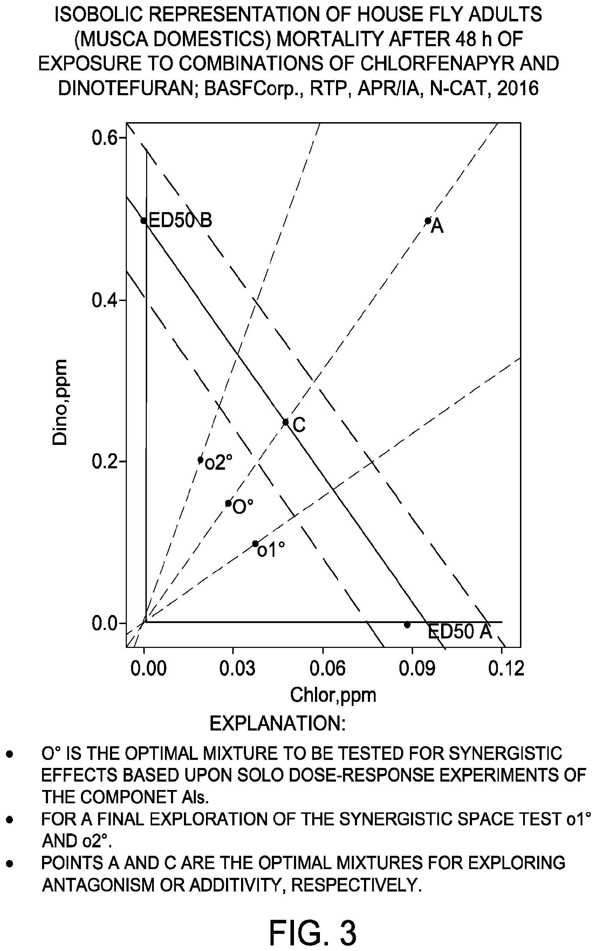

Prior to infestation, a cotton pellet (dia. 7 mm, Richmond) soaked in 10% sugar water was placed into each vial as a food and water source for the house flies. House fly adults were incapacitated using a carbon dioxide knockdown tray, and six insects were placed into each vial. Test vials were loosely capped to allow ventilation. Test vials were held at room temperature in compartmented boxes. Mortality was assessed at 4, 24, and 48 h. Figure 3 is an isobolic representation of house fly adults *(Musca domestica)* mortality after 48 h of exposure to combinations of chlorfenapyr and dinotefuran.

*Synergy testing:* After dose response testing, an assay combining the two active ingredients was conducted using the same method described above. Concentrations used for each active ingredient were below LC (lethal concentration) 50 rates. The rates used in the combination treatments for each active ingredient, chlorfenapyr and dinotefuran, were the same concentrations used when they were tested independently (below LC 50) as shown in the tables below.

Analysis: *Independent dose response testing.* Dose response analyses were conducted using the Dose Response and ED 50 in the AP Statistics Portal.

*Synergy analysis:* When applied in combination, the toxicological interaction between two compounds is classified based on the resultant impact on the observed effect. The interaction is termed antagonistic when the observed effect is less than the Colby expected mortality based on the responses of the two compounds applied independently at the same doses. When the observed effect of two compounds applied in combination is equal to that of the Colby expected mortality based on the responses of the two compounds applied independently, the relationship is described as additive. Finally, a synergistic interaction means that the effect of the two compounds applied in combination is greater than the Colby expected mortality based on the responses of the two compounds applied independently at the same doses.

Abbott's correction for control mortality and the Colby method for testing synergy were used to analyze combination data. The method is as follows:

Abbott's corrected mortality per observation (at 3 DAE) = [(% observed mortality - % control mortality) / (100% - % control mortality)] x 100.

Colby's expected mortality per combination observation = % mortality (A) + % mortality (B) - (% mortality (A) x % mortality (B))/ 100.

$$\text{Synergy ratio} = \% \text{ observed mortality} / \% \text{ Colby expected mortality}.$$

Additive interactions have synergy ratios equal to 1, antagonistic interactions have synergy ratios of less than 1, and synergistic interactions have synergy ratios of greater than 1.

Results: Chlorfenapyr and dinotefuran as shown in Table 8 and Table 9 provided a synergistic response when tested on Argentine ant workers as the synergy ratio for the combination ($0.001$ mg/m$^2$ + $0.0016$ mg/m$^2$; chlorfenapyr + dinotefuran) was calculated to be 1.21. Chlorfenapyr and dinotefuran as shown in Table 10 and Table 11 generally provided an additive to synergistic response when tested on house fly adults as the synergy ratio for the combination ($0.0022$ mg/m$^2$ + $0.011$ mg/m$^2$; chlorfenapyr + dinotefuran) was calculated to be 1.07.

Overall Conclusions: These assays demonstrated potential utility in combining chlorfenapyr and dinotefuran, for Argentine ant workers control as well as for house fly adult control.

**Table 8. Percent mortality of Argentine ant *(Linepithema humile)* workers after 72 h of exposure to combinations of chlorfenapyr and dinotefuran via glass vial contact assay; BASF Corp., RTP, APR/IA, N-CAT, 2016**

| Treatment | Rate (mg/m$^2$) | Mean % Mortality |
|---|---|---|
| | | 72h |
| Chlorfenapyr [2] | 0.001 | 17.9 |
| Dinotefuran [3] | 0.0016 | 28.6 |
| Chlorfenapyr + Dinotefuran | 0.001 + 0.0016 | 50.0 |
| Acetone | na | 0.0 |
| [1] Means are based on 30 insects (6 insects per replicate, 5 replicates per treatment); mortality was corrected with Abbott's formula | | |

**Table 9. Synergy ratio for combinations of chlorfenapyr and dinotefuran against Argentine ant *(Linepithema humile)* workers via glass vial contact assay; BASF Corp., RTP, APR/IA, N-CAT, 2016**

| | | Synergy Ratio [1] |
|---|---|---|
| Chlorfenapyr [2] | 0.001 | 1.21 |

(continued)

| | | Synergy Ratio [1] |
|---|---|---|
| | Rate (mg/m²) | 0.0016 |
| | | Dinotefuran [3] |

[1]

$$^1 \text{Synergy ratio} = (\% \text{ observed mortality}) / (\% \text{ Colby expected mortality})$$

**Table 10. Percent mortality of house fly adults *(Musca domestica)* adults after 48 h of exposure to combinations of chlorfenapyr and dinotefuran via glass vial contact assay; BASFCorp., RTP, APR/IA, N-CAT, 2016**

| Treatment | Rate (mg/m²) | Mean % Mortality [1] |
|---|---|---|
| | | 48 h |
| Chlorfenapyr [2] | 0.0022 | 38.5 |
| Dinotefuran [3] | 0.011 | 19.2 |
| Chlorfenapyr + Dinotefuran | 0.0022 + 0.011 | 53.8 |
| Acetone | na | 0.0 |

**Table 11. Synergy ratio for combinations of chlorfenapyr and dinotefuran against house fly *(Musca domestica)* adults via glass vial contact assay; BASF Corp., RTP, APR/IA, N-CAT, 2016**

| | | Synergy Ratio [1] |
|---|---|---|
| Chlorfenapyr [2] | 0.0022 | 1.07 |
| | Rate (mg/m$^2$) | 0.011 |
| | | Dinotefuran [3] |

[1]

$$^1 \text{ Synergy ratio} = (\% \text{ observed mortality}) / (\% \text{ Colby expected mortality})$$

**Claims**

1. A method for controlling pests comprising treating one or more of the following: the pests, their habitat, and their breeding grounds, with an effective amount of a composition comprising (1) chlorfenapyr as insecticide compound I; and (2) dinotefuran as insecticide compound II; and further wherein the compounds are combined in synergistic effective amounts ;wherein the pests being controlled is selected from bed bugs, cockroaches, ants and flies.

2. The method of claim 1, wherein the composition is applied to one or more surfaces in an amount from 1 - 80 grams per 3.78 Litre (per gallon).

3. The method of any of claims 1 and 2, wherein the ratio by weight of two of the compounds in the composition is between 1:100 and 100:1.

4. The method of any of claims 1-3, wherein the pests being controlled are pyrethroid- resistant.

5. The method of any of claims 1-4, wherein the area to be treated is one or more of the following habitat and/or breeding grounds selected from the group consisting of: domestic dwellings (homes, apartments and dormitories, for example), offices, hotels, motels, inns, hospitals, assisted living centers, retirement communities, military barracks, homeless shelters, sheds, cabins, schools, resorts, mobile homes, mausoleums, campgrounds, industrial buildings, residential buildings, agriculture buildings, livestock facilities, warehouses, zoos, cemeteries, theme parks, autos, buses, boats, trains, planes, ships, cargo areas and any storage, shelter, or living space.

6. The method of any of claims 1-5, further wherein the habitat and/or breeding grounds are treated by applying the composition to one or more of the following surfaces within the habitat and/or breeding grounds selected from the group consisting of: beds, mattress foundations, box springs porous and non-porous materials associated with beds or mattresses, headboards, bedframes, carpets, floor coverings, tiles, empty dressers, clothes, closets, draperies, high and low wall moldings, wall paper, leather, vinyl or wood surfaces associated with beds and upholstered fabric, the perimeter of urban structures and/or dwelling structures, cabinets, garages, sheds, foundations, crawl spaces, cracks, crevices, void areas, moist areas, openings around pipes, sinks, under appliances, door frames, window openings, attic venting structures, porches, utility entry points, siding, eaves, weep holes, tree hollows, decks and/or lawn furniture.

7. The method of any of claims 1-6, wherein the two compounds are applied simultaneously, that is jointly or separately, or in succession.

**Patentansprüche**

1. Verfahren zur Bekämpfung von Schädlingen, umfassend das Behandeln von einem oder mehreren der Folgenden:

   der Schädlinge, ihres Lebensraums und ihrer Brutstätten mit einer wirksamen Menge einer Zusammensetzung, die (1) Chlorfenapyr als Insektizidverbindung I und (2) Dinotefuran als Insektizidverbindung II umfasst; und wobei ferner die Verbindungen in synergistisch wirksamen Mengen kombiniert werden; wobei die zu bekämpfenden Schädlinge ausgewählt sind aus Bettwanzen, Kakerlaken, Ameisen und Fliegen.

2. Verfahren nach Anspruch 1, wobei die Zusammensetzung auf eine oder mehrere Oberflächen in einer Menge von 1-80 Gramm pro 3,78 Liter (pro Gallone) aufgebracht wird.

3. Verfahren nach einem der Ansprüche 1 und 2, wobei das Gewichtsverhältnis von zwei der Verbindungen in der Zusammensetzung zwischen 1:100 und 100:1 liegt.

4. Verfahren nach einem der Ansprüche 1-3, wobei die zu bekämpfenden Schädlinge pyrethroidresistent sind.

5. Verfahren nach einem der Ansprüche 1-4, wobei der zu behandelnde Bereich einer oder mehrere der folgenden Lebensräume und/oder Brutstätten ausgewählt aus der Gruppe bestehend aus Folgenden ist: Wohnhäuser (zum Beispiel Häuser, Wohnungen und Wohnheime), Büros/Praxen, Hotels, Motels, Wirtshäuser, Krankenhäuser, Zentren für betreutes Wohnen, Seniorenwohnanlagen, Militärkasernen, Obdachlosenunterkünfte, Scheunen, Hütten, Schulen, Ferienanlagen, Mobilheime, Mausoleen, Campingplätze, Industriegebäude, Wohngebäude, landwirtschaftliche Gebäude, Stallanlagen, Lager, Zoos, Friedhöfe, Freizeitparks, Autos, Busse, Boote, Züge, Flugzeuge, Schiffe, Frachtbereiche und jegliche Lager-, Unterbringungs- oder Lebensräume.

**6.** Verfahren nach einem der Ansprüche 1-5, wobei ferner die Lebensräume und/oder Brutstätten behandelt werden, indem die Zusammensetzung auf eine oder mehrere der folgenden Oberflächen innerhalb des Lebensraums und/oder der Brutstätten aufgebracht wird, die ausgewählt sind aus der Gruppe bestehend aus: Betten, Matratzenunterbauten, Boxspringbetten, porösen und nicht porösen Materialien, die mit Betten oder Matratzen assoziiert sind, Kopfbrettern, Bettgestellen, Teppichen, Bodenbelägen, Fliesen, leeren Kommoden, Kleidern, Schränken, Vorhängen, hohen und niedrigen Wandformteilen, Tapeten, Leder-, Vinyl- oder Holzoberflächen, die mit Betten und Polsterstoffen assoziiert sind, dem Außenbereich von Siedlungsstrukturen und/oder Wohnstrukturen, Schränken, Garagen, Scheunen, Fundamenten, Kriechräumen, Rissen, Fugen, Leerräumen, Feuchtbereichen, Öffnungen um Rohre, Waschbecken, unter Geräten, Türrahmen, Fensteröffnungen, Dachbelüftungsstrukturen, Veranden, Versorgungseinstiegsstellen, Verkleidungen, Traufen, Wasserlöchern, Baumhöhlen, Decks und/oder Rasenmöbeln.

**7.** Verfahren nach einem der Ansprüche 1-6, wobei die beiden Verbindungen gleichzeitig, das heißt gemeinsam oder getrennt, oder nacheinander, aufgebracht werden.

**Revendications**

**1.** Procédé de lutte contre des nuisibles comprenant le traitement d'un ou plusieurs des suivants :
les nuisibles, leur habitat et leurs aires de reproduction, avec une quantité efficace d'une composition comprenant (1) du chlorfénapyr en tant que composé insecticide I ; et (2) du dinotéfurane en tant que composé insecticide II ; et en outre dans lequel les composés sont combinés en quantités efficaces synergiques ; dans lequel les nuisibles contre lesquels on lutte sont choisis parmi les punaises de lit, les blattes, les fourmis et les mouches.

**2.** Procédé selon la revendication 1, dans lequel la composition est appliquée sur une ou plusieurs surfaces en une quantité allant de 1 à 80 g pour 3,78 litres (par gallon).

**3.** Procédé selon l'une quelconque des revendications 1 et 2, dans lequel le rapport pondéral de deux des composés dans la composition est compris entre 1:100 et 100:1.

**4.** Procédé selon l'une quelconque des revendications 1 à 3, dans lequel les nuisibles contre lesquels on lutte sont résistants aux pyréthroïdes.

**5.** Procédé selon l'une quelconque des revendications 1 à 4, dans lequel la zone à traiter est un ou plusieurs de l'habitat et/ou des aires de reproduction suivants choisis dans le groupe constitué par : des habitations domestiques (maisons, appartements et dortoirs, par exemple), des bureaux, des hôtels, des motels, des auberges, des hôpitaux, des centres de vie avec assistance, des villages de retraite, des casernes militaires, des hébergements pour sans-abris, des hangars, des chalets, des écoles, des complexes hôteliers, des mobil-homes, des mausolées, des terrains de camping, des bâtiments industriels, des bâtiments résidentiels, des bâtiments agricoles, des installations d'élevage, des entrepôts, des zoos, des cimetières, des parcs à thème, des autos, des bus, des bateaux, des trains, des avions, des navires, des zones de fret et tout espace de stockage, d'hébergement ou de vie.

**6.** Procédé selon l'une quelconque des revendications 1 à 5, dans lequel en outre l'habitat et/ou les aires de reproduction sont traités par application de la composition sur une ou plusieurs des surfaces suivantes à l'intérieur de l'habitat et/ou des aires de reproduction choisies dans le groupe constitué par : des lits, des garnitures de matelas, des sommiers tapissier, des matériaux poreux et non poreux associés à des lits ou des matelas, des têtes de lit, des cadres de lit, des tapis, des revêtements de sol, des carrelages, des commodes vides, des vêtements, des placards, des tentures, des moulures pour murs en haut et en bas, du papier peint, des surfaces en cuir, vinyliques ou en bois associées à des lits et du tissu rembourré, le périmètre de structures urbaines et/ou de structures d'habitation, des armoires, des garages, des hangars, des fondations, des vides sanitaires, des fissures, des crevasses, des zones vides, des zones humides, des ouvertures autour de tuyaux, des éviers, sous des appareils, des cadres de portes, des ouvertures de fenêtres, des structures de ventilation de grenier, des porches, des points d'entrée de service, un bardage, des avant-toits, des barbacanes, des creux d'arbre, des terrasses et/ou des meubles de jardin.

**7.** Procédé selon l'une quelconque des revendications 1 à 6, dans lequel les deux composés sont appliqués simultanément, c'est-à-dire conjointement ou séparément, ou successivement.

## LA1 FABRIC

FIG. 1A

PHANTOM
ALPINE
COMBINATION
WATER

## NY1 FABRIC

FIG. 1B

FIG. 1C

FIG. 1D

ISOBOLIC REPRESENTATION OF ARGENTINE ANTS (LINEPITHEMA HUMILE) WORKERS MORTALITY AFTER 72 h OF EXPOSURE TO COMBINATIONS OF CHLORFENAPYR AND DINOTEFURAN; BASFCorp., RTP, APR/IA, N-CAT, 2016

EXPLANATION:

- O° IS THE OPTIMAL MIXTURE TO BE TESTED FOR SYNERGISTIC EFFECTS BASED UPON SOLO DOSE-RESPONSE EXPERIMENTS OF THE COMPONET AIs.
- FOR A FINAL EXPLORATION OF THE SYNERGISTIC SPACE TEST o1° AND o2°.
- POINTS A AND C ARE THE OPTIMAL MIXTURES FOR EXPLORING ANTAGONISM OR ADDITIVITY, RESPECTIVELY.

FIG. 2

ISOBOLIC REPRESENTATION OF HOUSE FLY ADULTS
(MUSCA DOMESTICS) MORTALITY AFTER 48 h OF
EXPOSURE TO COMBINATIONS OF CHLORFENAPYR AND
DINOTEFURAN; BASFCorp., RTP, APR/IA, N-CAT, 2016

EXPLANATION:

- O° IS THE OPTIMAL MIXTURE TO BE TESTED FOR SYNERGISTIC EFFECTS BASED UPON SOLO DOSE-RESPONSE EXPERIMENTS OF THE COMPONET AIs.
- FOR A FINAL EXPLORATION OF THE SYNERGISTIC SPACE TEST o1° AND o2°.
- POINTS A AND C ARE THE OPTIMAL MIXTURES FOR EXPLORING ANTAGONISM OR ADDITIVITY, RESPECTIVELY.

# FIG. 3

## REFERENCES CITED IN THE DESCRIPTION

**Patent documents cited in the description**

- CN 102246803
- CN 103120157

- CN 103385253
- CN 104430474

**Non-patent literature cited in the description**

- **ROMERO et al.** *Pest Manag Sci*, 2010, vol. 66 (1), 1243-1248
- **OXBOROUGH R. M. et al.** Evaluation of indoor residual spraying with the pyrrole insecticide chlorfenapyr against pyrethroid-susceptible Anopheles arabiensis and pyrethroid-resistant Culex quinquefasciatus mosquitoes. *Transactions of the Royal Society of Tropical Medicine and Hygiene*, 01 October 2010, vol. 104 (10), 639-645
- **GODDARD**. *Midsouth Entomologist*, 2011, vol. 4, 57-62
- **COLBY, S.R.** Calculation of the synergistic and antagonistic response of herbicide combinations. *Weeds*, 1967, vol. 15, 20-22

- Catalogue of pesticide formulation types and international coding system. Technical Monograph. CropLife International, May 2008
- **MOLLET** ; **GRUBEMANN**. Formulation technology. Wiley VCH, 2001
- New developments in crop protection product formulation. **KNOWLES**. Agrow Reports DS243. T&F Informa, 2005
- Emulsifiers & Detergents. **MCCUTCHEON'S**. McCutcheon's Directories. International Ed. or North American Ed, 2014, vol. 1